# EUROPEAN PATENT SPECIFICATION

(11) **EP 0 605 696 B1**
(45) Date of publication and mention of the grant of the patent: **27.12.1996**
(21) Application number: 93915703.8
(22) Date of filing: 22.07.1993
(51) Int. Cl.: B67D 5/33, F16K 35/06

(54) **A COUPLING DEVICE**
KUPPLUNGSVORRICHTUNG
DISPOSITIF DE RACCORDEMENT

(30) Priority: 23.07.1992 DK 947/92
(43) Date of publication of application: 13.07.1994
(73) Proprietor: MICRO MATIC A/S, DK-5250 Odense SV (DK)
(72) Inventor: LARSEN, Morten, DK-5000 Odense C (DK); IPSEN, Bernt, DK-5462 Morud (DK)
(74) Representative: Holme, Edvard
(86) International application number: DK9300244
(87) International publication number: WO9402407

(56) References cited:
- EP-A- 0 471 121
- WO-A-92/00914

## Description

The invention concerns a coupling device having two members, viz. a coupling head and a valve, which each define an axis and are provided with cooperating coupling parts for clamping the two members together coaxially upon mutual turning, each part being moreover provided with a key which has a key pattern complementary to the key of the other member.

Today coupling devices of this type are used to a great extent for containers which serve to store and distribute a larger number of different liquids, which include e.g. beer, mineral water, chemicals, weed control agents, and oils for automobiles. The valve, which is provided in an opening in the wall of the container, is then usually a double valve having a first passage for connecting a gas reservoir above the liquid with a source of gas and a second passage for directing the liquid out of the container by means of a pressure difference established above the two passages. For beverages, such as beer and mineral water, the gas used is almost exclusively CO₂ having a positive pressure of between 1 and 3 bars for expelling the beverage from the container. Oils, in contrast, are usually pumped directly out of the container, the space above the oil being in open communication with the atmosphere via the first passage, in which a filter may optionally be inserted. The two passages may be opened in direct connection with the clamping of the coupling head on the valve or optionally subsequently by means of a separate opening mechanism which belongs to the coupling head.

Over the years the valves as well as the coupling heads have been developed to a point of great perfection, which has entailed that their individual components have been given a quite specific design in dependence on their function. Further, for reasons of economy and production these components have been standardized to an extensive degree so that coupling heads and valves can be assembled at random, although their intended applications are different.

Today a very large number of such containers are on the market, which involves the constant risk of wrong couplings taking place. Such wrong coupling may be rather harmless per se, although it is undesirable, as is the case if e.g. a coupling head for beer is connected with the valve on a container of mineral water. If, on the other hand, the mentioned coupling head is instead connected with the valve on a container containing chemicals or weed control agents, the error may involve health or even fatal risks.

Stricter environmental requirements will gradually entail that the sale of oils for automobiles in disposable packages is replaced by a new system where the motorists at the filling stations tap the oil directly from oil containers which are provided with a coupling device of the above-mentioned type. Each filling station must necessarily stock a large number of different oil types in a wide range of prices and grades to satisfy the demand. Consequently, in this case too, wrong couplings are possible if coupling devices of the same structure are used for all oil types. If such a wrong coupling takes place, it may entail that the motorists are cheated, because unsuspectingly they fill up a cheaper and inferior oil grade than they assume, with the consequent additional risk of the engine being damaged. Conversely, the filling station attendant will suffer a financial loss if an expensive oil is unintentionally sold at a low price owing to a wrong coupling which has not been discovered.

Since, as mentioned above, the common valve devices are standardized to a wide extent and can therefore be coupled together at random, the possibility of making errors of the above-mentioned type are still present however. Therefore, to prevent such errors coupling devices have been developed with a number of different designs of the coupling parts, so that only matching coupling heads and valves can be clamped together. If this clamping takes place by means of e.g. a threaded joint, it is thus necessary to manufacture coupling devices having just as many different types and/or sizes of threads as the number of the rather many types of oils which the filling stations must necessarily stock. When producing a large number of valve devices which are not uniform it is now possible to eliminate the risk of wrong mounting of the valve devices completely and the consequent confusion of the various oil types, but, of course, this advantage is obtained at the expense of the manufacturing price of the valve devices, which could be kept at a relatively low level precisely because of the mass production enabled by the standardization. To this should be added that it may be difficult for the staff to distinguish between the various coupling parts, and that consequently many costly working hours may be wasted on trying to assembling coupling heads and valves which do not match.

PCT application WO 92/00914 discloses a coupling device whose coupling parts are provided with a code/key to ensure that only a specific coupling can be connected to a barrel having the right contents.

In this structure the keys do not pass each other, but are directly mutually engaged, and then the two parts are clamped together by means of a union nut. Clamping thus takes place without turning the two parts with respect to each other.

The structure is extremely complicated and difficult to mount, and either great strength, if the mounting is to take place manually alone, or the use of special mounting tools is required. The known structure is therefore not suitable for easy and quick mounting of a coupling on e.g. oil drums, which must be replaced frequently at a filling or service station. Nor is the seal particularly safe since, in reality, it is conditional upon an uncontrollable clamping, which can fail very well if it is performed manually.

There is thus a pronounced need for a coupling device of the type mentioned in the opening paragraph which is substantially composed of quite standardized components and can therefore be mass produced economically, but which nevertheless ensures in a simple manner that a specific coupling head cannot be mounted on a valve for another purpose, while mounting takes easily and quickly with a single movement of the hand.

This is achieved by the new and unique features of the invention, which are that the keys are adapted in a manner such that in one or more preselected mutual angular positions, and only in these can the keys pass each other by mutual displacement in the clamping direction, and the coupling parts can be engaged only when such passage has taken place.

The coupling parts are thereby clamped together by a turning movement which can be performed easily and quickly by hand alone, and which ensures without special measures that the connection will be tight. These properties are extremely advantageous when the coupling device is used at e.g. filling or service stations where frequent exchange of oil drums is necessary.

Both the coupling head and the valve may moreover be constructed economically in the above-mentioned manner with completely uniform components, the only difference to protect against wrong mounting being now the key which can easily and inexpensively be provided in many different patterns which cannot be confused with one another.

These keys may quite simply consist in a special embodiment of an outwardly directed collar on one member and an inwardly directed collar on the other member, or on segments of such collars.

In a particularly advantageous embodiment the valve may have an outwardly directed collar with one or more cuts in the form of a key pattern and the coupling head may have a corresponding number of segments of an inwardly directed collar, each segment having a key pattern complementary to a corresponding cut in the collar of the valve.

The coupling head may be clamped together with the valve by means of e.g. a threaded joint or a bayonet joint. In the latter case the coupling parts of the valve may consist of one or more wedges provided on the underside of the outwardly directed collar of the valve, and the coupling parts of the coupling head may consist of a corresponding number of pins which extend radially inwardly in an open recess in the underside of the coupling part.

To facilitate the clamping operation the pins of the coupling head may be arranged on a separate clamping part, which surrounds the recess in the coupling head and can be turned with respect to said head from a position in which the keys of the two members can pass each other, to a position in which the two members are clamped together after such passage has taken place.

The invention will be explained more fully below, where further advantageous properties and technical effects of the invention are stated with reference to the drawing, in which
fig. 1 is a perspective exploded view of an exemplary embodiment of a valve device according to the invention,
fig. 2 is an axial section through the valve device of fig. 1 in the non-clamped state,
fig. 3 is a view of the same, but in the clamped state,
fig. 4 is a bottom view of the valve device of figs. 1-3 in the non-clamped state,
fig. 5 is a view of the same, but in the clamped state, and
fig. 6 shows examples of a plurality of possible key patterns.

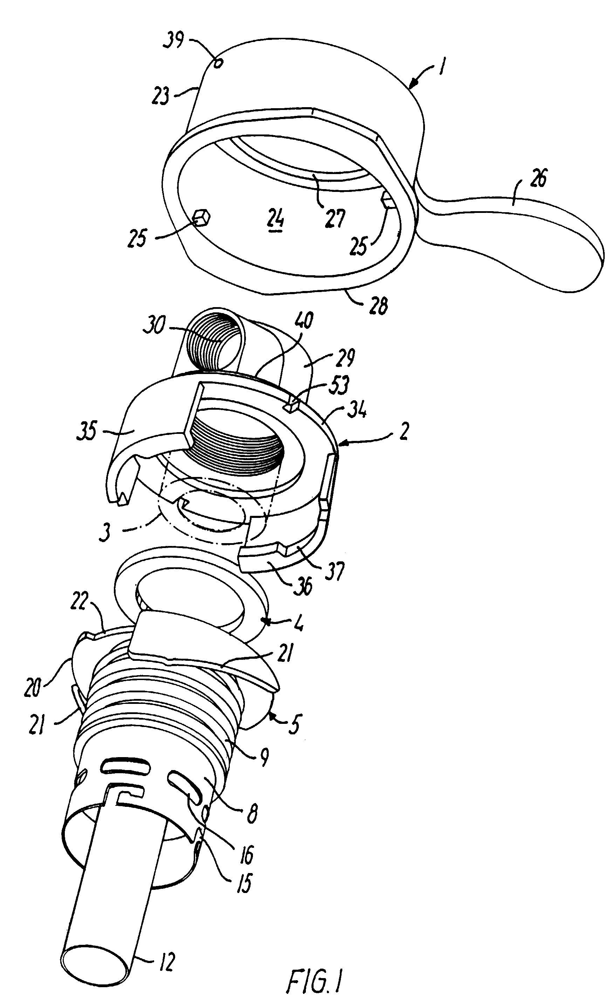

Fig. 1 is perspective exploded view of an embodiment of a coupling device whose main parts are clearly seen separately. In succession from above these parts are a clamping part 1 which belongs to a coupling head 2 and is rotabably mounted on it in the assembled state. A valve insert 3, shown in broken line, is threaded into the coupling head 2. A gasket 4 serves to form a seal between the coupling head 2 and a valve 5 when these two members are clamped together.

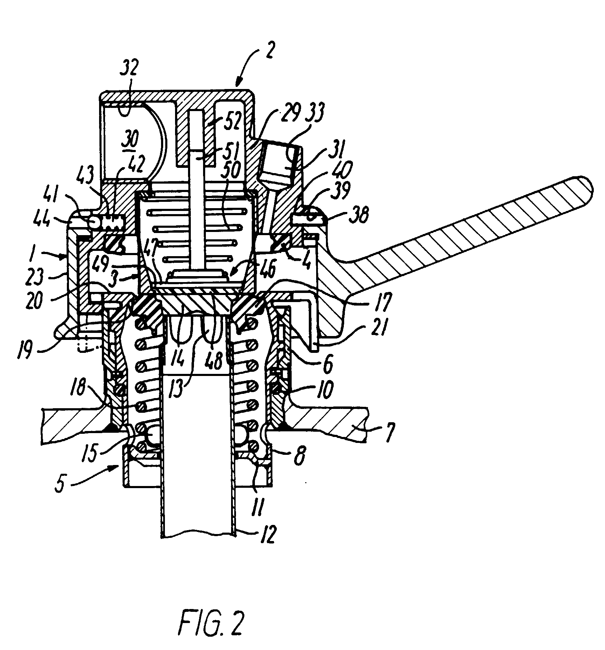

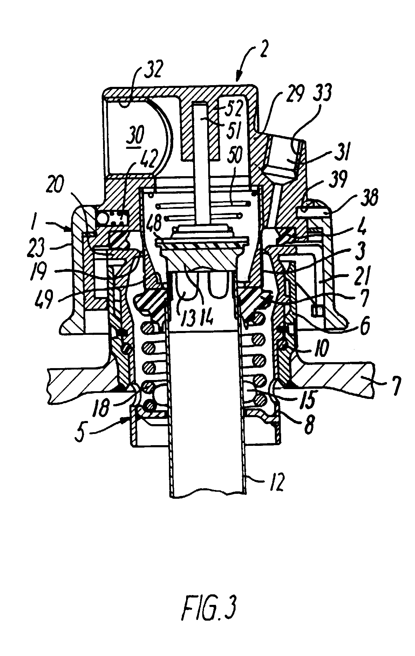

Figs. 2 and 3 are axial sections through the coupling device shown in fig. 1, whose main components 1-5 have now been assembled. In fig. 2 the two members of the coupling device have not been clamped together yet, while this is the case in fig. 3.

The valve 5 has a valve housing 8 which are secured in a sleeve 6 by specially adapted locking means 9 (see fig. 1) in a manner such that the valve cannot be removed by unskilled individuals who do not have the necessary special tools for the purpose. An O-ring serves to form a seal between the valve housing 8 and the sleeve 6. The sleeve 6 is in turn secured by means of e.g. welding in an opening in the top of a container 7, of which only a fraction is seen in the figures. The container may be for any purpose, but it is assumed below to be oil of the type which motorists tap in metered portions at filling or service stations to fill up their oil tanks. A riser pipe 12 is arranged coaxially in the valve housing 8 and is detachably connected with the valve housing 8 with a ring-shaped plate 11, which is locked in the valve housing by means of bayonet socket 15 (fig. 1). Part of the valve housing 8 extends a distance down into the container 7 and is provided with a plurality of air vents 16 at this location. A compression spring 18, which downwardly rests on the ring-shaped plate 11, serves to keep an elastomeric valve ring 17 of e.g. rubber engaged with the valve seat 14 of the riser pipe and a valve seat 19 on the valve housing 8 when the valve is not activated. The valve is closed in this state. As will be seen best from fig. 1, the valve housing has an outwardly directed collar 20 with two downwardly directed wedges 21 which constitute the coupling parts of the valve. As will be explained more fully below, the collar 20 of the valve forms a key with a key pattern in the form of cuts 22.

The clamping part 1 of the coupling head has a cylindrical part 23 which defines a recess 24. To pins 25 are arranged inside the recess, which constitute the coupling parts of the coupling head and cooperate with the wedges 21 of the valve 5 when the coupling head is to be clamped firmly on the valve. For convenient performance of this clamping operation the clamping part 1 is provided with a lever 26. Upwardly the clamping part 1 has an inwardly dircted collar 27 and downwardly an outwardly directed collar 28. The coupling head 2 comprises a housing 29 with an outlet opening 30 for the oil and an inlet opening 31 for the air. The outlet opening 30 is provided with internal threads 32 to connect the coupling head 2 with a dispensing assembly (not shown). Also the inlet opening 31 is provided with internal threads for threadedly connecting a filter having an optional non-return valve (not shown). The coupling head 2 mounts an outwardly protruding flange 34 having two peripherally arranged, downwardly directed legs 35, which are downwardly provided with segments of an inwardly directed collar 36 formed with cuts 37, which have a pattern complementary to the key pattern of the valve and form a key on the valve housing.

The clamping part 1 is kept rotatably in position in the coupling head 2 by means of pegs 38, which are inserted into an annular groove 40 in the coupling head via holes 39 in the cylindrical part 23 of the clamping part. This connection may also be provided in another manner. Thus, a ring or parts of a ring secured by the pegs 38 may be arranged in the groove 40. This structure is not shown. For the coupling head 2 to be able to pass the two pins 25 of the clamping part 1, two corresponding notches 53 are cut out in the flange 34 of the coupling head. The clamping part 1 may be rotated on the coupling head between a position in which the keys of the two members can pass each other, and a position in which the two members are clamped fully together after the keys have passed each other. A locking device is provided to fix the passage position, said device consisting of a ball 41, which lies in a bottom hole 42 in the coupling head 2, and of a compression spring 43, which is pressed slightly into a slightly smaller hole 44 in the cylindrical part 23 of the clamping part 1, when the two members are present in the position in which the keys can pass each other.

The valve insert 3 is screwed into the coupling head 2 by means of threads 45. A valve 46 is arranged inside the valve insert, which is hollow, to close it. This valve consists of a valve plate 47 having an elastomeric valve gasket 48 of e.g. rubber which is kept engaged with a seat 49 on the valve insert 3 by a compression spring 50. The valve 46 may be lifted vertically from the seat 49, and to control this lifting movement the valve is provided with a control pin 51 which can be slidably moved vertically in a guide 52 provided upwardly in the coupling head.

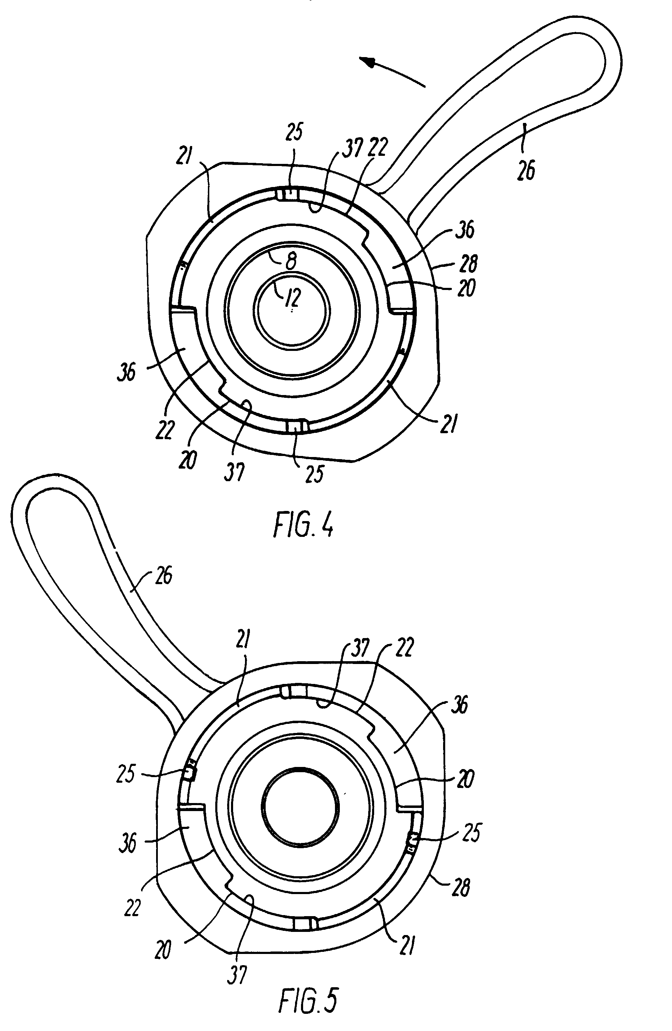

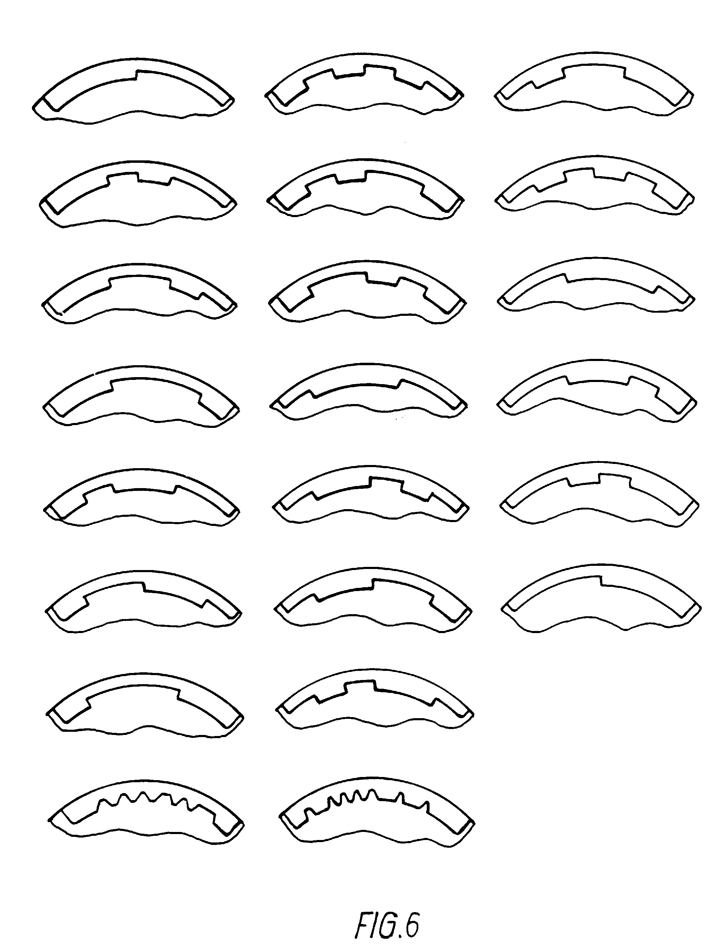

When the clamping part 1 is locked with respect to the coupling head 2, i.e. is present in the passage position, the segment 36 of the coupling head with the cuts 37 directly adjoin the pins 25 on the clamping part 1. This situation is shown in fig. 4 in which the valve device is shown from below. In this position the outwardly directed collar of the valve housing with the cuts 22 can pass the segments 36 of the coupling head and the pins 25 of clamping part and be pushed up into the recess. In other positions the pins 25 prevent this. After the outwardly directed collar 20 of the valve has thus been pushed up into the recess 24 of the coupling head, the two members are clamped together by rotating the clamping part 1 with the lever in the direction of the arrow to the position shown in fig. 5. During this movement the pins 25 slide on the wedges 21 of the valve, which thereby pull the coupling head axially down over the valve 5 to the position shown in fig. 3 in which the valve is now open. The gasket 4 has simultaneously been moved down to engage the upper side of the valve housing 8, thereby preventing oil from running out of the valve device from the valve now open, if the container should tilt. A non-return valve (not shown) in the inlet opening 31 serves the same purpose.

Opening of the valve takes place in that the valve insert 3 urges the elastomeric valve ring 17 downwardly in the space between the riser pipe 12 and the valve housing 8. This admits air to the interior of the container via the inlet opening 31 and the vents 16. The outlet openings 13 of the riser pipe are exposed at the same time so that the oil in the container can flow via the riser pipe 12, which is immersed in the oil, and the hollow valve insert 3 out through the outlet opening 30 to the dispensing assembly (not shown). This necessitates a pressure difference over the outlet opening 30 and inlet opening 31 of the coupling head, and this pressure difference is established, as mentioned before, in this case by means of a pump (not shown). If, instead, the valve device is to be used for a beverage, such as beer or mineral water, CO₂ at a positive pressure is normally used instead of a pump for expelling the beverage from the container. The connection for this CO₂ takes place at the inlet opening 31.

Fig. 6 shows a range of various key patterns which may be used for the valve device. The possible variations are almost infinite and can amply cover any need that might occur in practice. As specific key pattern is now selected for each oil type to be stocked, and all valves and coupling heads to be used for this type of oil are consistently provided with this key pattern. This eliminates any risk of a coupling head for one oil type being unintentionally or deliberately coupled with a valve for another type of oil. The reason is that in this case the coupling head and the valve will be provided with their respective key patterns which cannot pass each other.

The coupling device has been described above on the assumption that it was to be used for oils which, by means of a dispensing device, are tapped in portions by motorists at filling and service stations. Of course, it is readily evident that the coupling device of the invention may be used for any other liquid, e.g. beer, mineral water, chemicals or weed control agents. All valve devices for a specific liquid will then be provided with a key pattern of their own, which differs from the key patterns for valve devices for liquids within the same category as well as from all other liquids. This precludes any risk of coupling a coupling head for e.g. strong beer with a valve for light beer, nor can a coupling head for one liquid category be coupled with a valve for another liquid category.

To facilitate operation each valve pattern may be given a code in the form of e.g. a number which is marked on the respective coupling heads and valves and optionally also on the associated containers and dispensing devices. When a coupling head is to be mounted on a valve, the operating staff therefore just has to check whether the two members have the same key number to decide whether the two members match.

## Claims

1. A coupling device having two members, viz. a coupling head and a valve, which each define an axis and are provided with cooperating coupling parts for clamping the two members coaxially together upon mutual turning, each member being moreover provided with a key which has a key pattern complementary to the key of the other member, **characterized** in that the keys are adapted such that in one or more of preselected mutual angular positions, and only in these can the keys pass each other by mutual displacement in the clamping direction, and the coupling parts can be engaged only when such passage has taken place.

2. A coupling device according to claim 1, **characterized** in that each application has a specific key pattern which differs from all other key patterns.

3. A coupling device according to claim 1 or 2, **characterized** in that the keys are provided on an outwardly directed collar on one member and an inwardly directed collar on the other member, or on segments of such collars.

4. A coupling device according to claim 1, 2 or 3, **characterized** in that the valve has an outwardly directed collar having one or more cuts in the form of a key pattern, and that the coupling head has a corresponding number of segments of an inwardly directed collar, each having a key pattern complementary to a corresponding cut in the collar of the valve.

5. A coupling device according to claim 4, **characterized** in that the coupling parts of the valve consist of one or more wedges which are provided on the underside of its outwardly directed collar, and that the coupling parts of the coupling head consist of a corresponding number of pins which extend radially inwardly in an open recess in the underside of the coupling head.

6. A coupling device according to claim 5, **characterized** in that the pins of the coupling head are provided on a separate clamping part which encloses the recess in the coupling head and can be rotated with respect to this from a position in which the keys of the two members can pass each other, to another position in which the two parts, after such passage has taken place, are clamped together, and vice versa.

7. A coupling device according to claim 6, **characterized** in that a lever is provided-on the clamping part.

8. A coupling device according to claim 6 or 7, **characterized** in that it comprises a locking device to lock the clamping part of the coupling head in its passage position.

9. A coupling device according to one or more of claims 4-8, **characterized** in that each of the collar segments of the coupling head is provided on an axially extending leg having a length such that the segments are positioned substantially at the same level as the pins.

10. A coupling device according to claim 1 or 2, **characterized** in that the coupling parts of the two members consist of cooperating internal and external, respectively, threads.

## Patentansprüche

1. Kupplungsvorrichtung mit zwei Gliedern, nämlich einem Kupplungskopf und einem Ventil mit jeweils einer Achse und zusammenwirkenden Kupplungsteilen zum koaxialen Zusammenkuppeln der beiden Glieder durch gegenseitiges Drehen, wobei die Glieder desweiteren jeweils ein Schlüsselteil mit einem Muster aufweisen, das komplementär zum Schlüsselteilmuster des anderen Glieds ausgebildet ist, **dadurch gekennzeichnet,** dass die Schlüsselteile so ausgebildet sind, dass sie in einer oder mehreren vorgewählten gegenseitigen Winkelstellung(en), und zwar nur in dieser, durch gegenseitiges versetzen in der Kupplungsrichtung an einander vorbei passieren können, und dass die Kupplungsteile nur dann mit einander in Eingriff gebracht werden können, wenn diese Passage stattgefunden hat.

2. Kupplungsvorrichtung nach Anspruch 1, **dadurch gekennzeichnet,** dass jede Kupplungsvorrichtung ein spezifisches Schlüsselteilmuster aufweist, das von allen anderen Schlüsselteilmustern abweicht.

3. Kupplungsvorrichtung nach Anspruch 1 oder 2, **dadurch gekennzeichnet,** dass die Schlüsselteile an einem auswärts gerichteten Kragen am einen Glied und an einem einwärts gerichteten Kragen am anderen Glied oder an Segmenten des betreffenden Kragens vorgesehen sind.

4. Kupplungsvorrichtung nach Anspruch 1, 2 oder 3, **dadurch gekennzeichnet,** dass das ventil einen aüswärts gerichteten Kragen mit einem oder mehreren Ausschnitten in der Form von Schlüsselteilmustern aufweist, und dass der Kupplungskopf eine entsprechende Anzahl von Segmenten eines einwärts gerichteten Kragens aufweist, indem jedes Segment mit einem Schlüsselteilmuster ausgebildet ist, das einen entsprechenden Ausschnitt im Kragen des Ventils ergänzt.

5. Kupplungsvorrichtung nach Anspruch 4, **dadurch gekennzeichnet,** dass die Kupplungsteile des Ventils aus einem oder mehreren unterseitig am betreffenden auswärts kehrenden Kragen vorgesehenen Keilen bestehen, und dass die Kupplungsteile des Kupplungskopfs aus einer entsprechenden Anzahl von Zapfen bestehen, die sich radial einwärts in eine offene Vertiefung an der Unterseite des Kupplungskopfs erstrecken.

6. Kupplungsvorrichtung nach Anspruch 5, **dadurch gekennzeichnet,** dass die Zapfen des Kupplungskopfs an einem gesonderten Spannteil angeordnet sind, das die Vertiefung des Kupplungskopfs umschliesst und im verhältnis zu diesem von einer Stellung, in der die Schlüsselteile der beiden Glieder an einander vorbei passieren können, in eine andere Stellung gedreht werden kann, in welcher die beiden Teile nach erfolgter Passage mit einander verspannt sind, und umgekehrt.

7. Kupplungsvorrichtung nach Anspruch 6, **dadurch gekennzeichnet,** dass am Spannteil ein Hebel angeordnet ist.

8. Kupplungsvorrichtung nach Anspruch 6 oder 7, **dadurch gekennzeichnet,** dass sie ein Schliessteil zum Sperren des Spannteils des Kupplungskopfs in der Passierstellung aufweist.

9. Kupplungsvorrichtung nach einem oder mehreren der Ansprüche 4-8, **dadurch gekennzeichnet,** dass jedes Kragensegment des Kupplungskopfs an einem sich axial erstreckenden Schenkel mit einer solchen Länge angeordnet ist, dass die Segmente sich annähernd mit den Zapfen in gleicher Ebene befinden.

10. Kupplungsvorrichtung nach Anspruch 1 oder 2, **dadurch gekennzeichnet,** dass die Kupplungsteile der beiden Glieder aus einem jeweils inneren und äusseren Gewinde bestehen.

## Revendications

1. Dispositif de couplage comportant deux organes, à savoir une tête de couplage et une vanne, qui définissent chacun un axe et qui sont munis de parties de couplage destinées à coopérer pour serrer ensemble les deux organes coaxialement par rotation mutuelle, chaque organe étant de plus muni d'une clé comportant un dessin de clé complémentaire de celui de la clé de l'autre organe, caractérisé en ce que les clés sont adaptées de manière que dans une ou plusieurs positions angulaires mutuelles présélectionnées, et uniquement dans celles-ci, les clés peuvent passer l'une par rapport à l'autre par déplacement mutuel suivant la direction de serrage, et les parties de couplage peuvent être engagées uniquement lorsqu'un tel passage a eu lieu.

2. Dispositif de couplage selon la revendication 1, caractérisé en ce que chaque application a un dessin de clé spécifique qui diffère de tous les autres dessins de clés.

3. Dispositif de couplage selon la revendication 1 ou 2, caractérisé en ce que les clés sont munies d'un collier dirigé vers l'extérieur sur un organe et un collier dirigé vers l'intérieur sur l'autre organe, ou de segments de tels colliers.

4. Dispositif de couplage selon la revendication 1, 2 ou 3, caractérisé en ce que la vanne comporte un collier dirigé vers l'extérieur muni d'une ou plusieurs découpes ayant la forme d'un dessin de clé, en ce que la tête de couplage comporte un nombre correspondant de segments d'un collier dirigé vers l'intérieur, chacun d'eux comportant un dessin de clé complémentaire d'une découpe correspondante dans le collier de la vanne.

5. Dispositif de couplage selon la revendication 4, caractérisé en ce que les parties de couplage de la vanne sont constituées par une ou plusieurs cales qui sont prévues sur le côté intérieur de son collier dirigé vers l'extérieur, et en ce que les parties de couplage de la tête de couplage sont constituées par un nombre correspondant de broches qui s'étendent radialement vers l'intérieur dans un enfoncement ouvert dans le côté intérieur de la tête de couplage.

6. Dispositif de couplage selon la revendication 5, caractérisé en ce que les broches de la tête de couplage sont prévues sur une partie de serrage séparée qui renferme les enfoncements dans la tête de couplage et peut tourner par rapport à celle-ci à partir d'une position dans laquelle les clés des deux organes peuvent passer l'une par rapport à l'autre, vers une autre position dans laquelle les deux parties, après qu'un tel passage ait eu lieu, sont serrées ensemble, et vice versa.

7. Dispositif de couplage selon la revendication 6, caractérisé en ce que la partie de serrage est munie d'un levier.

8. Dispositif de couplage selon la revendication 6 ou 7, caractérisé en ce qu'il comprend un dispositif de verrouillage pour verrouiller la partie de serrage de la tête de couplage dans sa position de passage.

9. Dispositif de couplage selon l'une quelconque des revendications 4 à 8, caractérisé en ce que chacun de segment de collier de la tête de couplage est prévu sur une jambe s'étendant axialement présentant une longueur tels que les segments sont placés sensiblement au même niveau que les broches.

10. Dispositif de couplage selon la revendication 1 ou 2, caractérisé en ce que les parties de couplage des deux organes sont constituées de filetages destinés à coopérer entre eux interne et externe, respectivement.
